# EUROPÄISCHE PATENTSCHRIFT

(11) **EP 3 299 200 B1**
(45) Veröffentlichungstag und Bekanntmachung des Hinweises auf die Patenterteilung: **13.03.2019**
(21) Anmeldenummer: 17177332.8
(22) Anmeldetag: 22.06.2017
(51) Int. Cl.: B60K 6/20, B60W 20/15, B60W 20/12, B60W 50/00, B60W 10/06, B60W 10/08, B60W 30/192

(54) **VERFAHREN ZUM BETREIBEN EINES EINE HYBRIDANTRIEBSVORRICHTUNG AUFWEISENDEN KRAFTFAHRZEUGS SOWIE ENTSPRECHENDES KRAFTFAHRZEUG**
METHOD FOR OPERATING A MOTOR VEHICLE COMPRISING A HYBRID DRIVE DEVICE AND CORRESPONDING MOTOR VEHICLE
PROCÉDÉ DE FONCTIONNEMENT D'UN VÉHICULE AUTOMOBILE PRÉSENTANT UN DISPOSITIF D'ENTRAÎNEMENT HYBRIDE ET VÉHICULE AUTOMOBILE CORRESPONDANT

(30) Priorität: 27.07.2016 DE 102016213768
(43) Veröffentlichungstag der Anmeldung: 28.03.2018
(73) Patentinhaber: AUDI AG, 85045 Ingolstadt (DE)
(72) Erfinder: Blasinski, Boris, 85080 Gaimersheim (DE)

(56) Entgegenhaltungen:
- DE-A1-102011 014 164
- DE-A1-102012 112 794
- DE-A1-102014 116 569
- JP-A- 2008 267 227
- JP-A- 2016 113 911

## Beschreibung

Die Erfindung betrifft ein Verfahren zum Betreiben eines eine Hybridantriebsvorrichtung aufweisenden Kraftfahrzeugs, wobei die Hybridantriebsvorrichtung über eine mit einem Kraftstoff betreibbare Brennkraftmaschine sowie eine elektrische Maschine verfügt und der Brennkraftmaschine zumindest zeitweise Schmiermittel zugeführt wird. Die Erfindung betrifft weiterhin ein Kraftfahrzeug.

Die Hybridantriebsvorrichtung ist dem Kraftfahrzeug zugeordnet beziehungsweise bildet einen Bestandteil von diesem. Mit Hilfe der Hybridantriebsvorrichtung kann ein Drehmoment bereitgestellt werden, welches auf ein Antreiben des Kraftfahrzeugs gerichtet ist. Die Hybridantriebsvorrichtung verfügt über mehrere Antriebsaggregate, welche vorzugsweise unterschiedlich ausgestaltet sind. Beispielsweise ist als ein erstes der Antriebsaggregate die Brennkraftmaschine und als ein zweites der Antriebsaggregat die elektrische Maschine vorgesehen. Die mehreren Antriebsaggregate sind vorzugsweise derart ausgestaltet beziehungsweise wirkverbindbar, dass sie das auf das Antreiben des Kraftfahrzeugs gerichtete Drehmoment zumindest zeitweise gemeinsam erzeugen können. Insoweit ist es beispielsweise möglich, das Drehmoment nur mit Hilfe der elektrischen Maschine, nur mittels der Brennkraftmaschine oder mit der elektrischen Maschine sowie der Brennkraftmaschine gemeinsam zu erzeugen.

Der Brennkraftmaschine werden zu ihrem Betrieb mehrere Betriebsmittel zumindest zeitweilig zugeführt, nämlich der Kraftstoff und das Schmiermittel. Der Kraftstoff dient schlussendlich der Bereitstellung des Drehmoments durch die Brennkraftmaschine, während das Schmiermittel für eine Schmierung der Brennkraftmaschine herangezogen wird. Der Kraftstoff wird in der Brennkraftmaschine verbrannt und insoweit verbraucht. Das Schmiermittel dagegen liegt in einem Schmiermittelkreislauf vor, wobei der Brennkraftmaschine Schmiermittel beispielsweise aus einem Schmiermittelvorrat zugeführt, also zur Schmierung der Brennkraftmaschine herangezogen wird, und nachfolgend das Schmiermittel oder zumindest das verbleibende Schmiermittel erneut in dem Schmiermittelvorrat zwischengespeichert wird. Der Schmiermittelvorrat liegt beispielsweise in einem Schmiermitteltank der Hybridantriebsvorrichtung beziehungsweise des Kraftfahrzeugs vor.

In bestimmten Zuständen beziehungsweise Betriebszuständen der Hybridantriebsvorrichtung beziehungsweise der Brennkraftmaschine kann es zu einem Eintrag von Kraftstoff in das Schmiermittel kommen, insbesondere während eines Warmlaufbetriebs der Brennkraftmaschine. Der Warmlaufbetrieb liegt vor, solange die Temperatur der Brennkraftmaschine kleiner ist als ihre Betriebstemperatur, wobei letztere im Rahmen eines quasistationären Betriebs der Brennkraftmaschine erreicht wird. Bei einem Betrieb der Brennkraftmaschine mit einer Temperatur, welche kleiner ist als die Betriebstemperatur, wird der Warmlaufbetrieb der Brennkraftmaschine durchgeführt. Erreicht die Temperatur die Betriebstemperatur, so wird von dem Warmlaufbetrieb in einen Normalbetrieb der Brennkraftmaschine umgeschaltet. Der Warmlaufbetrieb unterscheidet sich beispielsweise von dem Normalbetrieb durch eine andere Betriebsstrategie, insbesondere wird die Brennkraftmaschine in dem Warmlaufbetrieb mit geringerer Effizienz betrieben als in dem Normalbetrieb, um mehr Wärme zu erzeugen, welche der Erwärmung der Brennkraftmaschine dient.

Durch das Eintragen des Kraftstoffs in das Schmiermittel wird letzteres verdünnt, sodass das nunmehr verdünnte Schmiermittel seine Schmierfunktion nicht mehr in dem vorgesehenen Ausmaß ausüben kann. Der Eintrag des Kraftstoffs in das Schmiermittel tritt im Rahmen der Hybridantriebsvorrichtung im Vergleich zu konventionellen Antriebsvorrichtungen verstärkt auf, weil das Kraftfahrzeug teilweise allein mittels der elektrischen Maschine angetrieben werden kann, sodass die Brennkraftmaschine sich im Stillstand befindet und entsprechend während der Fahrt des Kraftfahrzeugs häufiger gestartet werden muss. Das bedeutet im Lichte der vorstehenden Ausführungen, dass häufiger ein Warmlaufbetrieb der Brennkraftmaschine durchgeführt wird, während welchem Kraftstoff in das Schmiermittel eingetragen werden kann, sodass die Verdünnung des Schmiermittels verstärkt wird.

Aus der Druckschrift DE 10 2013 216 215 A1 ist beispielsweise ein Verfahren für einen Motor in einem Hybridfahrzeug bekannt, bei welchem als Reaktion darauf, dass die Ölverdünnung höher als ein Schwellenwert ist, ein Motor betrieben wird, um eine Motortemperatur für eine Zeitdauer über eine Schwellentemperatur zu erhöhen. Die Zeitdauer basiert dabei auf einer Differenz zwischen der Ölverdünnung und dem Schwellenwert, wobei die Zeitdauer mit Erhöhung der Differenz erhöht wird. Dokument DE102014116569 A1 beschreibt eine Verfahren zum Betreiben eines eine Hybridantriebsvorrichtung aufweisenden Kraftfahrzeugs gemäß dem Oberbegriff des Anspruchs 1.

Es ist Aufgabe der Erfindung, ein Verfahren zum Betreiben eines eine Hybridantriebsvorrichtung aufweisenden Kraftfahrzeugs vorzuschlagen, welches gegenüber bekannten Verfahren Vorteile aufweist, insbesondere rein grenzwertbasierte Maßnahmen zur Verringerung der Verdünnung des Schmiermittels vermeidet.

Dies wird erfindungsgemäß mit einem Verfahren mit den Merkmalen des Anspruchs 1 erreicht. Dabei ist vorgesehen, dass ein Schmiermittelverdünnungswert einer Verdünnung des Schmiermittels durch den Kraftstoff ermittelt wird, wobei bei Überschreiten eines ersten Schwellenwerts durch den Schmiermittelverdünnungswert die Brennkraftmaschine gestartet wird, wenn sich das Kraftfahrzeug auf einer Regenerationsstrecke einer voraussichtlichen Fahrstrecke des Kraftfahrzeugs befindet und die Regenerationsstrecke zum Verringern des Schmiermittelverdünnungswerts um einen bestimmten Wert ausreicht.

Zunächst wird das Ausmaß der Verdünnung des Schmiermittels durch den Kraftstoff in Form des Schmiermittelverdünnungswerts ermittelt. Dies kann grundsätzlich auf beliebige Art und Weise geschehen. Beispielsweise kann der Schmiermittelverdünnungswert gemessen, indirekt von anderen gemessenen Größen abgeleitet und/oder abgeschätzt werden. Wird nun festgestellt, dass der Schmiermittelverdünnungswert den ersten Schwellenwert überschreitet, so wird nicht - wie dies bei bekannten Verfahren teilweise der Fall ist - die Brennkraftmaschine zwangsläufig gestartet. Vielmehr wird bei Überschreiten des ersten Schwellenwerts durch den Schmiermittelverdünnungswert die Brennkraftmaschine nur dann gestartet, wenn sich das Kraftfahrzeug auf einer Regenerationstrecke beziehungsweise der Regenerationsstrecke befindet. Der erste Schwellenwert entspricht beispielsweise einem Schmiermittelverdünnungswert, welcher vorliegt, wenn keine Verdünnung des Schmiermittels durch Kraftstoff vorliegt. Alternativ kann er jedoch auch größer sein als dieser.

Um festzustellen, ob sich das Kraftfahrzeug auf der Regenerationsstrecke befindet, wird die voraussichtliche Fahrstrecke des Kraftfahrzeugs ausgewertet. Diese voraussichtliche Fahrstrecke wird zunächst ermittelt, beispielsweise mittels einer Navigationseinrichtung des Kraftfahrzeugs. Mit Hilfe der Navigationseinrichtung wird ein voraussichtliches Ziel des Kraftfahrzeugs bestimmt und anhand dieses voraussichtlichen Ziels die voraussichtliche Fahrstrecke bis zu diesem voraussichtlichen Ziel ermittelt. Das voraussichtliche Ziel beruht beispielsweise auf einer Benutzereingabe durch einen Fahrer des Kraftfahrzeugs und/oder einer Auswertung von Fahrdaten des Kraftfahrzeugs. Beispielsweise kann in letzterem Fall das Ansteuern eines bestimmten Fahrziels in der Vergangenheit festgestellt werden und abgeleitet werden, ob auch die momentane Fahrt des Kraftfahrzeugs dieses Ziel als voraussichtliches Ziel hat.

Nach dem Ermitteln der voraussichtlichen Fahrstrecke wird geprüft, ob diese eine oder mehrere Regenerationsstrecken enthält. Die Regenerationsstrecke zeichnet sich insbesondere dadurch aus, dass ein Betrieb der Brennkraftmaschine mit Betriebsparametern möglich und/oder zulässig ist, welche eine erfolgreiche Verringerung des Schmiermittelverdünnungswerts und mithin also der Verdünnung des Schmiermittels durch den Kraftstoff ermöglichen. Als Betriebsparameter wird beispielsweise die Temperatur der Brennkraftmaschine herangezogen. Insoweit wird also überprüft, ob die Brennkraftmaschine auf der wenigstens einen Regenerationsstrecke derart betrieben werden kann, dass die Temperatur zumindest zeitweilig die Betriebstemperatur und/oder eine Regenerationstemperatur erzielt, wobei die Regenerationstemperatur höher ist als die Betriebstemperatur.

Die Regenerationstemperatur ist beispielsweise derart gewählt, dass ein besonders rasches Verringern des Schmiermittelverdünnungswerts möglich wird. Hierzu entspricht beispielsweise die Regenerationstemperatur einer maximal zulässigen Temperatur der Brennkraftmaschine, weil der Kraftstoff üblicherweise umso schneller aus dem Schmiermittel ausgetragen wird, je höher die Temperatur der Brennkraftmaschine während ihres Betriebs ist. Bevorzugt ist die Regenerationstemperatur in jedem Fall höher als die Betriebstemperatur, ab deren Erreichen von dem Warmlaufbetrieb in den Normalbetrieb umgeschaltet wird.

Wurde nun festgestellt, dass sich das Kraftfahrzeug momentan auf der Regenerationsstrecke befindet, so wird diese daraufhin überprüft, ob sie zum Verringern des Schmiermittelverdünnungswerts um einen bestimmten Wert ausreicht. Maßgeblich ist hierfür insbesondere die verbleibende Länge der Regenerationsstrecke, also die Strecke, welche das Kraftfahrzeug noch bis zum voraussichtlichen Verlassen der Regenerationsstrecke zurücklegt. Hieraus wird die voraussichtlich mögliche Verringerung des Schmiermittelverdünnungswerts bestimmt und mit dem bestimmten Wert verglichen. Ist sie größer als der Wert, so wird schlussendlich die Brennkraftmaschine gestartet, insbesondere ausschließlich wenn die voraussichtliche Verringerung größer ist als der bestimmte Wert.

Insgesamt wird die Brennkraftmaschine - sofern sie deaktiviert ist - lediglich dann aktiviert, wenn der Schmiermittelverdünnungswert den ersten Schwellenwert überschreitet, sich das Kraftfahrzeug derzeit auf der Regenerationsstrecke befindet und diese zum Verringern des Schmiermittelverdünnungswerts um den bestimmten Wert ausreicht. Selbstredend kann es jedoch vorgesehen sein, dass die Brennkraftmaschine aufgrund anderer Umstände gestartet wird, beispielsweise aufgrund einer entsprechenden Bedienung durch den Fahrer des Kraftfahrzeugs. Sofern im Rahmen dieser Beschreibung die Rede davon ist, dass die Brennkraftmaschine gestartet wird, so ist vorzugsweise stets gemeint, dass die Brennkraftmaschine gestartet wird, sofern sie bislang nicht betrieben wurde, sich also beispielsweise im Stillstand befand, oder weiter betrieben wird, sofern sie bisher schon betrieben wurde.

Eine weitere Ausgestaltung der Erfindung sieht vor, dass zum Ermitteln, ob die Regenerationsstrecke zum Verringern des Schmiermittelverdünnungswerts um den bestimmten Wert ausreicht, ein Streckenprofil der Regenerationsstrecke ausgewertet wird, wobei das Streckenprofil ein Geschwindigkeitsprofil, ein Höhenprofil und/oder ein Straßenklassenprofil umfasst. Der Regenerationsstrecke ist also das Streckenprofil zugeordnet. In dem Streckenprofil können unterschiedliche Größen, wie beispielsweise das Geschwindigkeitsprofil, das Höhenprofil und/oder das Straßenklassenprofil gespeichert sein. Entsprechende Daten sind also beispielsweise in der Navigationseinrichtung des Kraftfahrzeugs hinterlegt.

Das Geschwindigkeitsprofil gibt beispielsweise eine Richtgeschwindigkeit oder eine Höchstgeschwindigkeit beziehungsweise einen entsprechenden Verlauf für die Regenerationsstrecke an. Unter der Richtgeschwindigkeit ist dabei eine unter normalen Umständen zu erwartende Geschwindigkeit auf der Regenerationsstrecke zu verstehen, während die Höchstgeschwindigkeit die maximal zulässige Geschwindigkeit bezeichnet.

Das Höhenprofil gibt vorzugsweise den Verlauf der Höhe auf der Regenerationsstrecke an, sodass auf einfache Art und Weise ermittelt werden kann, welche Belastung der Brennkraftmaschine zu erwarten ist beziehungsweise welche Leistung voraussichtlich mit Hilfe der Brennkraftmaschine bereitgestellt werden muss. Liegt beispielsweise eine Steigung voraus, so kann darauf geschlossen werden, dass eine Temperaturerhöhung der Brennkraftmaschine auf einfache Art und Weise zu erreichen ist, weil zur Überwindung der Steigung eine entsprechende Leistung von der Hybridantriebsvorrichtung beziehungsweise der Brennkraftmaschine bereitgestellt werden muss.

Im Falle eines vorausliegenden Gefälles sind diese Bedingungen jedoch nicht erfüllt, weil voraussichtlich die Brennkraftmaschine nicht betrieben werden muss, um die Regenerationsstrecke beziehungsweise den entsprechenden Abschnitt der Regenerationsstrecke zu bewältigen. Insbesondere ist die Durchführung eines Fahrbetriebs des Kraftfahrzeugs im Falle des Gefälles häufig allein mittels der elektrischen Maschine möglich, welche zudem unter Umständen rekuperativ betrieben werden kann, also zur Umwandlung von kinetischer Energie des Kraftfahrzeugs in elektrische Energie, welche anschließend zwischengespeichert werden kann.

Das Straßenklassenprofil beschreibt schließlich, um welchen Straßentyp oder um welche Straßentypen es sich im Falle der Regenerationsstrecke handelt, insbesondere also den Verlauf der Straßentypen. Der Straßentyp ist beispielsweise aus einem der nachfolgenden Straßentypen ausgewählt: Autobahn, Bundesstraße, Landstraße, Ortsdurchgangsstraße und Innenstadtstraße einer Stadt, insbesondere Großstadt. Die voraussichtlich mögliche Verringerung des Schmiermittelverdünnungswerts ist nun beispielsweise im Falle der Autobahn größer als im Falle der Ortsdurchgangsstraße oder der Innenstadtstraße, weil auf letzteren lediglich geringere Geschwindigkeiten zulässig sind und häufig auch kein durchgehender Fahrbetrieb, sondern vielmehr ein Stop-and-Go-Betrieb zu erwarten ist.

Eine weitere Ausgestaltung der Erfindung sieht vor, dass bei Überschreiten eines zweiten Schwellenwerts durch den Schmiermittelverdünnungswert die Brennkraftmaschine gestartet wird, wenn die voraussichtliche Fahrstrecke keine Regenerationsstrecke aufweist. Der zweite Schwellenwert ist vorzugsweise größer als der erste Schwellenwert. bei dem Überschreiten des zweiten Schwellenwerts ist insoweit die Verdünnung des Schmiermittels durch den Kraftstoff höher als bei Überschreiten des ersten Schwellenwerts. Insoweit ist es dringlicher, entsprechende Maßnahmen zu ergreifen und die Brennkraftmaschine zu starten. Wiederum wird die voraussichtliche Fahrstrecke ermittelt und darauf geprüft, ob sie die wenigstens eine Regenerationsstrecke enthält. Ist dies nicht der Fall, so wird im Rahmen der hier beschriebenen bevorzugten Ausgestaltung die Brennkraftmaschine unverzüglich gestartet, um den Schmiermittelverdünnungswert zu verringern.

Eine weitere bevorzugte Ausführungsform der Erfindung sieht vor, dass bei Überschreiten des zweiten Schwellenwerts durch den Schmiermittelverdünnungswert das Starten der Brennkraftmaschine bis zum Erreichen der Regenerationsstrecke verzögert wird, wenn die voraussichtliche Fahrstrecke die Regenerationsstrecke aufweist. Vorstehend wurde der Fall erläutert, dass die voraussichtliche Fahrstrecke keine Regenerationsstrecke aufweist, wenn der Schmiermittelverdünnungswert den zweiten Schwellenwert überschreitet beziehungsweise überschritten hat. In diesem Fall soll die Brennkraftmaschine unverzüglich gestartet werden.

Enthält dagegen die voraussichtliche Fahrstrecke die Regenerationsstrecke, so kann das Starten der Brennkraftmaschine zurückgestellt werden, bis das Kraftfahrzeug die Regenerationsstrecke erreicht hat. Dies ist insbesondere dann der Fall, wenn erwartungsgemäß vor dem Erreichen der Regenerationsstrecke der Schmiermittelverdünnungswert einen bestimmten Grenzwert nicht überschreitet, insoweit also bis zum Erreichen der Regenerationsstrecke kleiner ist als dieser. Anders ausgedrückt wird also bei Überschreiten des zweiten Schwellenwerts durch den Schmiermittelverdünnungswert das Starten der Brennkraftmaschine nur dann bis zum Erreichen der Regenerationsstrecke verzögert, wenn die voraussichtliche Fahrstrecke die Regenerationsstrecke aufweist und - optional - der zu erwartende Schmiermittelverdünnungswert bei Erreichen der Regenerationsstrecke kleiner als der Grenzwert ist.

Eine Weiterbildung der Erfindung sieht vor, dass das Starten der Brennkraftmaschine nur dann verzögert wird, wenn ein prädizierter Schmiermittelverdünnungswert kleiner ist als ein Schmiermittelverdünnungsgrenzwert. Der prädizierte Schmiermittelverdünnungswert ist derjenige Schmiermittelverdünnungswert, welcher bei dem Erreichen der nächstliegenden Generationsstrecke der voraussichtlichen Fahrstrecke voraussichtlich vorliegen wird. Der prädizierte Schmiermittelverdünnungswert wird hierzu prädiktiv ermittelt, insbesondere abgeschätzt. Beispielsweise erfolgt das Prädizieren beziehungsweise Abschätzen auf Grundlage der voraussichtlichen Fahrstrecke, insbesondere auf der Grundlage des Streckenprofils der voraussichtlichen Fahrstrecke. Hinsichtlich des Streckenprofils wird auf die vorstehenden Ausführungen für das Streckenprofil der Regenerationsstrecke hingewiesen.

Beispielsweise wird der prädizierte Schmiermittelverdünnungswert durch Aufsummieren beziehungsweise Integration von Erwartungswerten für die Vergrößerung des Schmiermittelverdünnungswerts bei dem Verfahren der voraussichtlichen Fahrstrecke bis zum Erreichen der Regenerationsstrecke vorgenommen. Gemäß den vorstehenden Ausführungen darf nun das Starten der Brennkraftmaschine nur dann verzögert werden, wenn der prädizierte Schmiermittelverdünnungswert, also der erwartete Schmiermittelverdünnungswert bei Erreichen der Regenerationsstrecke, kleiner ist als der Schmiermittelverdünnungsgrenzwert. Der Schmiermittelverdünnungsgrenzwert kann beispielsweise beliebig gewählt sein. Beispielsweise entspricht er einem maximal zulässigen Schmiermittelverdünnungswert. Er kann jedoch auch dem nachfolgend beschriebenen dritten Schwellenwert oder vierten Schwellenwert entsprechen.

Eine bevorzugte Ausgestaltung der Erfindung sieht vor, dass bei Überschreiten eines dritten Schwellenwerts durch den Schmiermittelverdünnungswert die Brennkraftmaschine gestartet wird, wenn ein Elektrofahrtprioritätswert von einem Maximalwert verschieden ist. Der dritte Schwellenwert ist wiederum größer als der erste Schwellenwert und/oder der zweite Schwellenwert. Bei Überschreiten des dritten Schwellenwerts durch den Schmiermittelverdünnungswert ist insoweit die Verdünnung des Schmiermittels durch den Kraftstoff höher ist als bei Überschreiten des zweiten Schwellenwerts beziehungsweise des ersten Schwellenwerts. Wird der dritte Schwellenwert durch den Schmiermittelverdünnungswert überschritten, so wird der Elektrofahrtprioritätswert mit seinem Maximalwert verglichen. Ist er kleiner, so wird die Brennkraftmaschine gestartet, insbesondere nur dann.

Der Elektrofahrtprioritätswert wird beispielsweise von dem Fahrer des Kraftfahrzeugs und/oder einer Fahrerassistenzeinrichtung des Kraftfahrzeugs festgelegt. Je höher der Elektrofahrtprioritätswert umso größer soll das Verhältnis der während des Fahrbetriebs des Kraftfahrzeugs mittels der elektrischen Maschine bereitgestellten Leistung sein. Entsprechend ist die während des Fahrbetriebs mittels der Brennkraftmaschine bereitgestellte Leistung umso kleiner, je höher der Elektrofahrtprioritätswert ist.

Der Elektrofahrtprioritätswert kann vorzugsweise zwischen einem Minimalwert und dem Maximalwert eingestellt beziehungsweise gewählt werden. Selbstverständlich kann es vorgesehen sein, dass der Elektrofahrtprioritätswert lediglich den Minimalwert und den Maximalwert annehmen kann. Vorzugsweise ist jedoch wenigstens ein Zwischenschritt vorgesehen. Eine derartige Vorgehensweise erlaubt es beispielsweise dem Fahrer des Kraftfahrzeugs, die Brennkraftmaschine manuell zu deaktivieren und den weiteren Fahrbetrieb mit Hilfe der elektrischen Maschine durchzuführen, indem er den Elektrofahrtprioritätswert auf den Maximalwert setzt, beispielsweise indem er ein entsprechendes Bedienelement, insbesondere einen Schalter, einen Taster, einen Wählhebel oder dergleichen betätigt.

Schließlich kann im Rahmen einer weiteren vorteilhaften Ausgestaltung der Erfindung vorgesehen sein, dass bei Überschreiten eines vierten Schwellenwerts durch den Schmiermittelverdünnungswert die Brennkraftmaschine stets gestartet wird. Der vierte Schwellenwert ist größer als der erste Schwellenwert und/oder größer als der zweite Schwellenwert und/oder größer als der dritte Schwellenwert. Beispielsweise entspricht der vierte Schwellenwert einem maximal zulässigen Schmiermittelverdünnungswert und insoweit einer kritischen Schmiermittelverdünnung. In diesem Fall wird die Brennkraftmaschine stets in Betrieb genommen, unabhängig von weiteren Bedingungen. Die Erfindung betrifft weiterhin ein Kraftfahrzeug, insbesondere ein Kraftfahrzeug zur Durchführung des Verfahrens gemäß den vorstehenden Ausführungen, wobei das Kraftfahrzeug eine Hybridantriebsvorrichtung aufweist, die über eine mit einem Kraftstoff betreibbare Brennkraftmaschine sowie eine elektrische Maschine verfügt, wobei der Brennkraftmaschine zumindest zeitweise Schmiermittel zugeführt wird. Dabei ist vorgesehen, dass das Kraftfahrzeug dazu ausgebildet ist, einen Schmiermittelverdünnungswert einer Verdünnung des Schmiermittels durch den Kraftstoff zu ermitteln, wobei bei Überschreiten eines ersten Schwellenwerts durch den Schmiermittelverdünnungswert die Brennkraftmaschine gestartet wird, wenn sich das Kraftfahrzeug auf einer Regenerationsstrecke einer voraussichtlichen Fahrstrecke des Kraftfahrzeugs befindet und die Regenerationsstrecke zum Verringern des Schmiermittelverdünnungswerts um einen bestimmten Wert ausreicht.

Auf die Vorteile einer derartigen Vorgehensweise beziehungsweise einer derartigen Ausgestaltung des Kraftfahrzeugs wurde vorstehend bereits hingewiesen. Sowohl das Kraftfahrzeug als auch das entsprechende Verfahren können gemäß den vorstehenden Ausführungen weitergebildet sein, sodass insoweit auf diese verwiesen wird.

Die Erfindung wird nahfolgend anhand der in der Zeichnung dargestellten Ausführungsbeispiele näher erläutert, ohne dass eine Beschränkung der Erfindung erfolgt. Dabei zeigt die einzige
- Figur: ein Kraftfahrzeug auf einer in mehrere Teilstrecken eingeteilten Fahrstrecke des Kraftfahrzeugs.

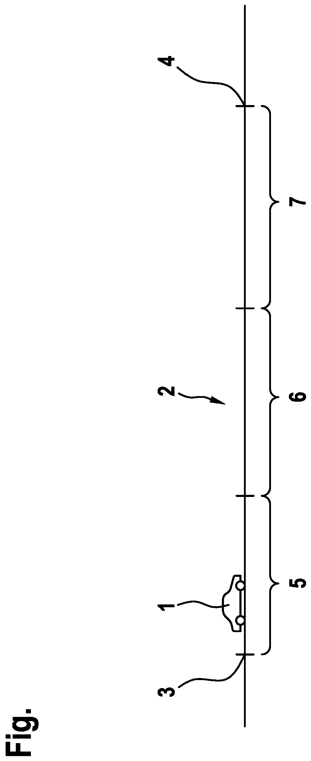

Die Figur 1 zeigt ein Kraftfahrzeug 1, das eine Hybridantriebsvorrichtung mit einer Brennkraftmaschine und einer elektrischen Maschine aufweist. Zum Betreiben der Brennkraftmaschine werden Kraftstoff und ein Schmiermittel verwendet. Das Kraftfahrzeug 1 bewegt sich auf einer bestimmten Fahrstrecke 2. Die Fahrstrecke 2 geht beispielsweise von einem Startpunkt 3 aus und endet an einem Ziel 4. Die Fahrstrecke 2 wird vorzugsweise von einer nicht dargestellten Navigationseinrichtung des Kraftfahrzeugs 1 ermittelt. Zu diesem Zweck kann der Startpunkt 3 der Position des Kraftfahrzeugs 1 bei dessen Betriebsbeginn entsprechen, während der Zielpunkt 4 von einem Fahrer des Kraftfahrzeugs 1 vorgegeben wird oder wurde. Die Navigationseinrichtung teilt nun die Fahrstrecke zwei in mehrere Teilstrecken 5, 6 und 7 ein.

Der Fahrstrecke 2 und insoweit den Teilstrecken 5, 6 und 7 ist ein Streckenprofil zugeordnet, welches beispielsweise ein Geschwindigkeitsprofil, ein Höhenprofil und/oder ein Straßenklassenprofil umfasst. Anhand des Streckenprofils wird nun ermittelt, ob eine der Teilstrecken der Fahrstrecke 2 in Form einer Regenerationsstrecke vorliegt, bei deren Befahren durch das Kraftfahrzeug 1 eine Verringerung eines Schmiermittelverdünnungswerts möglich ist. Der Schmiermittelverdünnungswert beschreibt die Verdünnung des Schmiermittels durch den Kraftstoff, die insbesondere während eines Warmlaufs der Brennkraftmaschine auftreten kann.

In Abhängigkeit von dem Schmiermittelverdünnungswert können nun unterschiedliche Maßnahmen eingeleitet werden. So wird beispielsweise bei Überschreiten eines ersten Schwellenwerts durch den Schmiermittelverdünnungswert die Brennkraftmaschine gestartet, insbesondere nur dann, wenn sich das Kraftfahrzeug auf einer Regenerationsstrecke (hier beispielsweise die Teilstrecke 5) der voraussichtlichen Fahrstrecke 2 des Kraftfahrzeugs 1 befindet und die Regenerationsstrecke zum Verringern des Schmiermittelverdünnungswert und einen bestimmten Wert ausreicht.

Überschreitet dagegen der Schmiermittelverdünnungswert einen zweiten Schwellenwert, welcher größer ist als der erste Schwellenwert, so wird die Brennkraftmaschine gestartet, wenn die voraussichtliche Fahrstrecke keine Regenerationsstrecke aufweist. Liegt jedoch beispielsweise die Teilstrecke 6 als Regenerationsstrecke vor, so kann unter Umständen das Starten der Brennkraftmaschine bis zum Erreichen dieser Regenerationsstrecke verzögert werden. Entsprechendes gilt, falls die Teilstrecke 7 als Regenerationsstrecke vorliegt beziehungsweise als solche identifiziert wurde.

Bei dem Überschreiten eines dritten Schwellenwerts oder eines vierten Schwellenwerts unterbleibt dagegen eine Betrachtung der voraussichtlichen Fahrstrecke. So wird bei Überschreiten des dritten Schwellenwerts durch den Schmiermittelverdünnungswert die Brennkraftmaschine stets gestartet, wenn ein Elektrofahrtprioritätswert von einem Maximalwert verschieden ist. Ist der Schmiermittelverdünnungswert dagegen sogar größer als der vierte Schwellenwert, so wird die Brennkraftmaschine stets betrieben beziehungsweise in Betrieb genommen, um den Schmiermittelverdünnungswert zu verringern.

## Patentansprüche

1. Verfahren zum Betreiben eines eine Hybridantriebsvorrichtung aufweisenden Kraftfahrzeugs (1), wobei die Hybridantriebsvorrichtung über eine mit einem Kraftstoff betreibbare Brennkraftmaschine sowie eine elektrische Maschine verfügt und der Brennkraftmaschine zumindest zeitweise Schmiermittel zugeführt wird, wobei ein Schmiermittelverdünnungswert einer Verdünnung des Schmiermittels durch den Kraftstoff ermittelt wird, **dadurch gekennzeichnet, dass** bei Überschreiten eines ersten Schwellenwerts durch den Schmiermittelverdünnungswert die Brennkraftmaschine gestartet wird, wenn sich das Kraftfahrzeug (1) auf einer Regenerationsstrecke einer voraussichtlichen Fahrstrecke (2) des Kraftfahrzeugs (1) befindet und die Regenerationsstrecke zum Verringern des Schmiermittelverdünnungswert um einen bestimmten Wert ausreicht.

2. Verfahren nach Anspruch 1, **dadurch gekennzeichnet, dass** zum Ermitteln, ob die Regenerationsstrecke zum Verringern des Schmiermittelverdünnungswerts um den bestimmten Wert ausreicht, ein Streckenprofil der Regenerationsstrecke ausgewertet wird, wobei das Streckenprofil ein Geschwindigkeitsprofil, ein Höhenprofil und/oder ein Straßenklassenprofil umfasst.

3. Verfahren nach einem der vorhergehenden Ansprüche, **dadurch gekennzeichnet, dass** bei Überschreiten eines zweiten Schwellenwerts durch den Schmiermittelverdünnungswert die Brennkraftmaschine gestartet wird, wenn die voraussichtliche Fahrstrecke (2) keine Regenerationsstrecke aufweist.

4. Verfahren nach Anspruch 3, **dadurch gekennzeichnet, dass** bei Überschreiten des zweiten Schwellenwerts durch den Schmiermittelverdünnungswert das Starten der Brennkraftmaschine bis zum Erreichen der Regenerationsstrecke verzögert wird, wenn die voraussichtliche Fahrstrecke (2) die Regenerationsstrecke aufweist.

5. Verfahren nach einem der vorhergehenden Ansprüche, **dadurch gekennzeichnet, dass** das Starten der Brennkraftmaschine nur dann verzögert wird, wenn ein prädizierter Schmiermittelverdünnungswert kleiner ist als ein Schmiermittelverdünnungsgrenzwert.

6. Verfahren nach einem der vorhergehenden Ansprüche, **dadurch gekennzeichnet, dass** bei Überschreiten eines dritten Schwellenwerts durch den Schmiermittelverdünnungswert die Brennkraftmaschine gestartet wird, wenn ein Elektrofahrtprioritätswert von einem Maximalwert verschieden ist.

7. Verfahren nach einem der vorhergehenden Ansprüche, **dadurch gekennzeichnet, dass** bei Überschreiten eines vierten Schwellenwerts durch den Schmiermittelverdünnungswert die Brennkraftmaschine stets gestartet wird.

8. Kraftfahrzeug (1), insbesondere zur Durchführung des Verfahrens nach einem oder mehreren der vorhergehenden Ansprüche, wobei das Kraftfahrzeug (1) eine Hybridantriebsvorrichtung aufweist, die über eine mit einem Kraftstoff betreibbare Brennkraftmaschine sowie eine elektrische Maschine verfügt, wobei der Brennkraftmaschine zumindest zeitweise Schmiermittel zugeführt wird, wobei das Kraftfahrzeug (1) dazu ausgebildet ist, einen Schmiermittelverdünnungswert einer Verdünnung des Schmiermittels durch den Kraftstoff zu ermitteln, **dadurch gekennzeichnet, dass** bei Überschreiten eines ersten Schwellenwerts durch den Schmiermittelverdünnungswert die Brennkraftmaschine gestartet wird, wenn sich das Kraftfahrzeug (1) auf einer Regenerationsstrecke einer voraussichtlichen Fahrstrecke (2) des Kraftfahrzeugs (1) befindet und die Regenerationsstrecke zum Verringern des Schmiermittelverdünnungswert um einen bestimmten Wert ausreicht.

## Claims

1. Method for operating a motor vehicle (1) having a hybrid drive device, wherein the hybrid drive device has an internal combustion engine able to be operated using a fuel as well as an electric engine and lubricant is supplied at least at times to the internal combustion engine, wherein a lubricant dilution value of a dilution of the lubricant by the fuel is determined, **characterised in that,** in the case of exceeding a first threshold value by the lubricant dilution value, the internal combustion engine is started if the motor vehicle (1) is located on a regeneration route of an expected driving route (2) of the motor vehicle (1) and the regeneration route is sufficient to reduce the lubricant dilution value by a determined value.

2. Method according to claim 1, **characterised in that,** to determine whether the regeneration route is sufficient to reduce the lubricant dilution value by the determined value, a route profile of the regeneration route is evaluated, wherein the route profile comprises a speed profile, a height profile and/or a road class profile.

3. Method according to any one of the preceding claims, **characterised in that,** in the case of exceeding a second threshold value by the lubricant dilution value, the internal combustion engine is started if the expected driving route (2) has no regeneration route.

4. Method according to claim 3, **characterised in that,** in the case of exceeding the second threshold value by the lubricant dilution value, the starting of the internal combustion engine is delayed until reaching the regeneration route if the expected driving route (2) has the regeneration route.

5. Method according to any one of the preceding claims, **characterised in that** the starting of the internal combustion engine is only then delayed if a predicated lubricant dilution value is smaller than a lubricant dilution limit value.

6. Method according to any one of the preceding claims, **characterised in that** in the case of exceeding a third threshold value by the lubricant dilution value, the internal combustion engine is started if an electric drive priority value is different to a maximum value.

7. Method according to any one of the preceding claims, **characterised in that,** in the case of exceeding a fourth threshold value by the lubricant dilution value, the internal combustion engine is always started.

8. Motor vehicle (1), in particular for implementing the method according to one or more of the preceding claims, wherein the motor vehicle (1) has a hybrid drive device which has an internal combustion engine able to be operated using a fuel as well as an electric engine, wherein lubricant is supplied at least at times to the internal combustion engine, wherein the motor vehicle (1) is formed to determine a lubricant dilution value of a dilution of the lubricant by the fuel, **characterised in that,** in the case of exceeding a first threshold value by the lubricant dilution value, the internal combustion engine is started if the motor vehicle (1) is located on a regeneration route of an expected driving route (2) of the motor vehicle (1) and the regeneration route is sufficient to reduce the lubricant dilution value by a determined value.

## Revendications

1. Procédé de fonctionnement d'un véhicule automobile (1) présentant un dispositif d'entraînement hybride, dans lequel le dispositif d'entraînement hybride dispose d'un moteur à combustion interne pouvant fonctionner avec un carburant ainsi que d'un moteur électrique et un lubrifiant est amené au moins temporairement au moteur à combustion interne, dans lequel une valeur de dilution de lubrifiant d'une dilution du lubrifiant par le carburant est déterminée, **caractérisé en ce que,** lors du dépassement d'une première valeur seuil par la valeur de dilution de lubrifiant, le moteur à combustion interne est démarré, lorsque le véhicule automobile (1) se trouve sur un tronçon de régénération d'un parcours prévu (2) du véhicule automobile (1) et le tronçon de régénération suffit à réduire la valeur de dilution de lubrifiant d'une valeur définie.

2. Procédé selon la revendication 1, **caractérisé en ce que**, pour déterminer si le tronçon de régénération suffit à réduire la valeur de dilution de lubrifiant de la valeur définie, un profil de parcours du tronçon de régénération est évalué, dans lequel le profil de parcours comprend un profil de vitesse, un profil de hauteur et/ou un profil de catégorie de route.

3. Procédé selon l'une quelconque des revendications précédentes, **caractérisé en ce que**, lors du dépassement d'une deuxième valeur seuil par la valeur de dilution de lubrifiant, le moteur à combustion interne est démarré, lorsque le parcours prévu (2) ne présente pas de tronçon de régénération.

4. Procédé selon la revendication 3, **caractérisé en ce que**, lors du dépassement de la deuxième valeur seuil par la valeur de dilution de lubrifiant, le démarrage du moteur à combustion interne est retardé jusqu'à ce que le tronçon de régénération soit atteint, lorsque le parcours prévu (2) présente le tronçon de régénération.

5. Procédé selon l'une quelconque des revendications précédentes, **caractérisé en ce que** le démarrage du moteur à combustion interne n'est retardé que lorsqu'une valeur de dilution de lubrifiant prédite est inférieure à une valeur limite de dilution de lubrifiant.

6. Procédé selon l'une quelconque des revendications précédentes, **caractérisé en ce que**, lors du dépassement d'une troisième valeur seuil par la valeur de dilution de lubrifiant, le moteur à combustion interne est démarré, lorsqu'une valeur de priorité de trajet électrique est différente d'une valeur maximum.

7. Procédé selon l'une quelconque des revendications précédentes, **caractérisé en ce que**, lors du dépassement d'une quatrième valeur seuil par la valeur de dilution de lubrifiant, le moteur à combustion interne est toujours démarré.

8. Véhicule automobile (1), en particulier pour la réalisation du procédé selon l'une quelconque ou plusieurs des revendications précédentes, dans lequel le véhicule automobile (1) présente un dispositif d'entraînement hybride, qui dispose d'un moteur à combustion interne pouvant fonctionner avec un carburant ainsi que d'un moteur électrique, dans lequel un lubrifiant est amené au moins temporairement au moteur à combustion interne, dans lequel le véhicule automobile (1) est configuré pour déterminer une valeur de dilution de lubrifiant d'une dilution du lubrifiant par le carburant, **caractérisé en ce que**
lors du dépassement d'une première valeur seuil par la valeur de dilution de lubrifiant, le moteur à combustion interne est démarré, lorsque le véhicule automobile (1) se trouve sur un tronçon de régénération d'un parcours prévu (2) du véhicule automobile (1) et le tronçon de régénération suffit à réduire la valeur de dilution de lubrifiant d'une valeur définie.
